# EUROPEAN PATENT APPLICATION

(11) **EP 4 692 409 A1**
(43) Date of publication of application: **11.02.2026**
(21) Application number: 23932682.0
(22) Date of filing: 11.08.2023
(51) Int. Cl.: C23C 2/06, C22C 18/04, C23C 2/28, C23C 2/40, C22C 38/02, C22C 38/04, C22C 38/06, C22C 38/14, C22C 38/12, C23C 2/02

(54) **HOT DIPPING AND HIGH-TEMPERATURE AUSTENITIZING TECHNOLOGIES-BASED ZINC-ALUMINUM-MAGNESIUM COATED STEEL SHEET TO BE STAMPED, PREPARATION METHOD THEREFOR AND USE THEREOF**

(30) Priority: 10.04.2023 CN 202310375292
(71) Applicant: Bengang Steel Plates Co., Ltd., Benxi, Liaoning 117022 (CN)
(72) Inventor: LIU, Hongliang, Benxi, Liaoning 117022 (CN); CHEN, Yu, Benxi, Liaoning 117022 (CN); YANG, Yubo, Benxi, Liaoning 117022 (CN); LUO, Qun, Benxi, Liaoning 117022 (CN); WU, Guangxin, Benxi, Liaoning 117022 (CN); YANG, Bo, Benxi, Liaoning 117022 (CN); FU, Yujing, Benxi, Liaoning 117022 (CN)
(74) Representative: Murgitroyd & Company
(86) International application number: PCT/CN2023/112570
(87) International publication number: WO 2024/212409

(57) **Abstract**

The present invention discloses a zinc-aluminum-magnesium coated steel sheet based on hot dipping and high-temperature forming technologies, a preparation method therefor and a use thereof. The steel sheet is prepared by hot dipping, austenitizing under high temperature conditions, and stamping. A dip plating solution for the hot dipping is a Zn-Al-Mg dip plating solution, the compositions are located at a zinc-rich angle of a Zn-Al-Mg ternary phase diagram, and the mass percentage satisfies that the content of Zn is 85-95 wt.%, the content of Al is 4.5-8.5 wt.%, and the content of Mg is 1-4.5 wt.%. After having undergoing hot dipping, the steel sheet is changed into a zinc-aluminum-magnesium coated steel sheet that includes a steel sheet, a zinc-aluminum-magnesium coating-2 and an intermediate compound layer, wherein the zinc-aluminum-magnesium coating comprises Zn, Al and MgZn₂ phases; the zinc-aluminum-magnesium coating comprises Zn-Al two-phase eutectic and Zn-Al-MgZn₂ three-phase eutectic; and the intermediate compound layer is an Fe-Al or Fe-Al-Zn intermetallic compound. After having undergoing austenitizing, the zinc-aluminum-magnesium coated steel sheet is changed into a steel sheet to be stamped that is composed of a steel sheet and a zinc-aluminum-magnesium coating-3, wherein the zinc-aluminum-magnesium coating-3 comprises an α-Fe (Zn, Al) phase. The zinc-aluminum-magnesium coated steel sheet has the corrosion current density I_{corr} of (1.20-1.68)×10⁻⁵ A/cm² as a corrosion-resistant material, and has the elongation of 38-54% as a high-temperature mechanical material.

## Description

### TECHNICAL FIELD

The present invention relates to a coated steel for automobiles, in particular to a zinc-aluminum-magnesium coated steel sheet to be stamped based on hot dipping and high-temperature austenitizing technologies, a preparation method therefor and a use thereof.

### BACKGROUND ART

During hot stamping processes, hot dipping technology for steel sheets has the advantages of preventing surface oxidation and decarburization. Coatings used commonly comprises Al-Si coatings, pure Zn coatings, Zn-based alloy coatings. Among these, Al-Si coatings are currently the most widely applied, which can effectively prevent oxidation and decarburization on the steel sheet surface. However, such coatings has the problem of poor corrosion resistance at cut edges and perforations. Compared with Al-Si coatings, zinc-based coatings not only provide protection against surface oxidation and decarburization but also provide cathodic protection, delivering excellent corrosion resistance at perforations and cut edges. Nevertheless, existing zinc-based coatings face technical problems of crack formation and propagation into the substrate during hot stamping. This issue directly limits the application of zinc-based coatings in the field of automobile manufacturing.

According to existing literature 1 (Li Xuetao, Zhang Jie, Jiang Sheming, et al., Cracks Generation and Propagation Mechanism of Galvanized Hot Stamping Steel Plate during Hot Deformation [J], Heat Treatment of Metals, 2019, 31 (02):227-32), the formation of cracks in the hot-stamped steel with pure zinc coating during deformation process is attributed to large amount of Zn elements enrichment in the pure zinc coating, and under the synergistic effect of high temperature and external stress, liquid zinc diffuses along austenite grain boundary and continuously reacts with the substrate to generate α-Fe(Zn), and the cracks propagate along the interface between α-Fe (Zn) and liquid phase, causing brittle fracture of the substrate.

Based on the above-mentioned reasons, alloy elements such as Al and Ni can be added to the pure zinc plating bath to generate alloy inhibition layers such as Fe₂Al₅ at the coating-substrate interface, which helps keep the enriched liquid zinc away from the substrate and inhibit the diffusion of zinc into the substrate.

However, in the existing literature 2 (Cui Qingling, Li Jianping, Li Shiyu et al., Microstructure Evolution and Crack Formation of Zn Based Coating on 22MnB5 Hot Formed Steel [J]. Journal of Iron and Steel Research, 2019, 31(02): 227-32), it was observed that during the austenitizing process, the Al element in the Fe₂Al₅ alloy inhibiting layer of the GI coated steel sheet migrates entirely to the coating surface, and the Fe₂Al₅ alloy layer disappears, resulting in the loss of its inhibitory effect, which allows a large number of locally enriched zinc in the coating to diffuse into the substrate, causing brittle fracture of the substrate.

To address the aforementioned issues, the existing literature 3 (CN 107099748B [P], 2019) discloses an super-high-strength zinc-aluminum-magnesium coated steel sheet for high-temperature shaping and manufacturing method thereof. Prior to high-temperature shaping, its coating includes three microstructures of Zn/Al eutectic structure, Zn/Al/Zn₂Mg three-phase eutectic structure, and pure Zn particles. However, this technology still has the following problems: the content of the Zn/Al/Zn₂Mg three-phase eutectic structure in the coating alloy and the enrichment of zinc are difficult to control, and the high-temperature reaction between the locally enriched zinc and the steel substrate is difficult to suppress, thereby causing high-temperature cracking of the hot-dip galvanized steel sheet.

### SUMMARY

It is an objective of the present invention to provide a zinc-aluminum-magnesium coated steel sheet to be stamped based on hot dipping and high-temperature austenitizing technologies, and preparation method therefor. Aiming at the problem of high-temperature cracking caused by uneven microscopic distribution of the coating components as mentioned in the background art, the present invention regulates the composition of the plating bath and the hot dipping process to form a fully eutectic structure, improving microscopic segregation of the coating components and local enrichment of Zn. Additionally, the present invention adjusts the austenitization process parameters and hot stamping process parameters to suppress the high-temperature cracking of hot-dip galvanized steel sheet. At the same time, the Mg element added during the regulation of the plating bath composition reacts with Zn element to form a low-potential phase MgZn₂, which can significantly enhances the corrosion resistance of the coating.

The technical solutions of the present invention are as follows:

The present invention provides a zinc-aluminum-magnesium coated steel sheet to be stamped based on hot dipping and high-temperature austenitizing technologies, and the steel sheet to be stamped is prepared by subjecting a steel substrate to hot dipping and austenitizing under high-temperature conditions.

A plating bath for the hot dipping is a Zn₋Al-Mg dip plating bath, with a composition by mass percentage as follows: a Zn content of 85-95 wt.%, a Al content of 4.5-8.5 wt.%, and a Mg content of 1-4.5 wt.% of Mg.

After the hot dipping, the steel substrate is changed into a zinc-aluminum-magnesium coated steel sheet based on hot dipping, including a steel substrate, a zinc-aluminum-magnesium coating-2, and an intermediate compound layer between the steel substrate and the coating-2.

The zinc-aluminum-magnesium coating-2 includes Zn, Al, and MgZn₂ phases. The zinc-aluminum-magnesium coating-2 includes Zn-Al two-phase eutectic and Zn-Al-MgZn₂ three-phase eutectic.

In the Zn-Al two-phase eutectic and Zn-Al-MgZn₂ three-phase eutectic of the zinc-aluminum-magnesium coating-2, a total eutectic content of the Zn-Al two-phase eutectic and the Zn-Al-MgZn₂ three-phase eutectic is 50-95%, the Zn element exists in the forms of Zn phase and MgZn₂ phase, and a lamellar spacing of the eutectic structure is less than 1 µm.

The intermediate compound layer between the steel substrate and the coating, referred to as an intermediate compound layer, is Fe-Al or Fe-Al-Zn intermetallic compounds.

After austenitizing at 900-920°C, the zinc-aluminum-magnesium coated steel sheet based on hot dipping technology is changed into a zinc-aluminum-magnesium coated steel sheet to be stamped based on hot dipping and austenitizing technologies.

The zinc-aluminum-magnesium coated steel sheet to be stamped based on hot dipping and austenitizing technologies includes a steel substrate and a zinc-aluminum-magnesium coating-3. The zinc-aluminum-magnesium coating-3 includes an α-Fe (Zn, Al) single-layer structure, in which Fe, Zn, Al, and Mg elements are uniformly distributed, with a Zn content of 3.5-10.3 wt.%, a Al content of 0.5-12.2 wt.%, a Mg content of 0-0.2 wt.%, and a O content of 0.5-8.2 wt.%.

Further, in the above-mentioned technical solutions, the steel substrate comprises the following chemical components in percentage by mass: a C content of 0.31-0.35 wt.%, a Si content of 0.05-0.20 wt.%, a Mn content of 1.40-1.50 wt.%, a P content of no more than 0.020 wt.%, a S content of no more than 0.004 wt.%, a Al content of no less than 0.060 wt.%, a Ti content of no less than 0.010-0.025 wt.%, a V content of 0.16-0.20 wt.%, a N content of no more than 0.0045 wt.%, a B content of 0.0010-0.0030 wt.%, and the balance of Fe and inevitable impurities.

Further, in the above-mentioned technical solutions, in the Zn-Al two-phase eutectic and Zn-Al-MgZn₂ three-phase eutectic of the zinc-aluminum-magnesium coating-2, Zn element exists in the forms of Zn phase and MgZn₂ phase, Al element exists in the form of Al phase, and the lamellar spacing of the eutectic structure is less than 1 µm.

Further, in the above-mentioned technical solutions, a thickness of the intermediate compound layer is 0.3-3 µm.

Further, in the above-mentioned technical solutions, the Zn content in the plating bath is 85-95 wt.%, and the composition of the Zn-Al-Mgplating bath is located in the zinc-rich angle of a Zn-Al-Mg ternary phase diagram.

The present invention provides a method for preparing the zinc-aluminum-magnesium coated steel sheet to be stamped based on hot dipping and austenitizing technologies, including the following steps of:

Step 1, preparing a steel substrate to be hot-dipped.

Step 2, performing hot dipping on the steel substrate to be hot-dipped: first preparing the plating bath, and then performing hot dipping on the steel substrate to be hot-dipped prepared in step 1 to obtain the zinc-aluminum-magnesium coated steel sheet based on hot dipping, named as Sample 1-2.

In the step 2, the plating bath has a composition by mass percentage as follows: a Al content of 4.5-8.5 wt%, a Mg content of 1-4.5 wt.%, and the balance of Zn and inevitable impurities.

In the Step 2, the steel plate to be hot-dipped is subject to hot dipping under conditions of a dipping temperature of 440-460°C and a dipping time of 3-10 s, then the hot-dipped steel sheet is cooled to room temperature at a cooling rate of greater than 30 °C/s.

Step 3, performing austenitizing on the zinc-aluminum-magnesium coated steel sheet based on hot dipping: performing austenitizing on the Sample 1-2 obtained in step 2 to obtain the zinc-aluminum-magnesium coated steel sheet to be stamped based on hot dipping and high-temperature austenitizating technologies, named as Sample 1-3.

In the step 3, austenitizing conditions are as follows: an austenitizing temperature of 900-920°C and a holding time of 1-3 min.

The present invention provides a stamping method for the above-mentioned zinc-aluminum-magnesium coated steel sheet to be stamped based on hot dipping and austenitizing technologies. After austenitizing is completed in the step 3, the obtained Sample 1-3 is immediately subjected to stamping and rapidly cooled to room temperature, thereby obtaining the zinc-aluminum-magnesium coated steel sheet based on hot dipping and high-temperature forming technologies.

Further, in the above-mentioned solutions, in the step 1, steel materials to be treated is heated and smelted into melted iron, which then undergoes melted iron pretreatment, converter smelting, secondary refining, and continuous casting to obtain a steel billet, followed by subjecting the steel billet to heating, rolling, controlled-cooling, coiling, pickling, and cold rolling to obtain a steel substrate, and finally, the steel substrate is subject to continuous annealing at an annealing temperature of 800±5°C and a dew point of 50 ± 10°C to obtain the steel substrate to be hot-dipped.

The present invention provides a use of the above-mentioned zinc-aluminum-magnesium coated steel sheet based on hot dipping technology as a corrosion-resistant material. In a 3.5 wt.% NaCl solution at 25°C, the corrosion current density I_{corr} of the zinc-aluminum-magnesium coated steel sheet based on hot dipping technology is (1.20-1.68)×10⁻⁵ A/cm².

The present invention provides a use of the above-mentioned zinc-aluminum-magnesium coated steel sheet to be stamped based on hot dipping and high-temperature austenitizing technologies as a high-temperature mechanical material. The zinc-aluminum-magnesium coated steel plate to be stamped based on hot dipping and high-temperature austenitizing technologies has an elongation of 38-54% under the austenitizing conditions of austenitizing temperature of 920 °C and holding time of 1-3 min.

Technical effects of the present invention have been verified by experimental test as follows:

The scanning electron microscope (SEM) and Energy Dispersive X-ray Spectroscopy (EDS) analysis of the cross-section of the aforementioned zinc-aluminum-magnesium coated steel sheet based on hot dipping technology show that the coating includes Zn-Al two-phase eutectic and Zn-Al-MgZn₂ three-phase eutectic. The total eutectic content of Zn-Al two-phase eutectic and Zn-Al-MgZn₂ three-phase eutectic is 50-95%, the Zn element exists in the forms of Zn phase and MgZn₂ phase, and the lamellar spacing of the structure is less than 1 µm. The intermediate compound layer between the steel substrate and the coating includes Fe-Al or Fe-Al-Zn intermetallic compounds, with a thickness of 0.3-3 µm.

Corrosion resistance test shows that in a 3.5 wt.% NaCl solution at 25 °C, the corrosion current density I_{corr} of the above-mentioned zinc-aluminum-magnesium coated steel sheet based on hot dipping technology is (1.20-1.68)×10⁻⁵ A/cm².

Cross-sectional SEM and EDS analysis shows that the coating of the above-mentioned zinc-aluminum-magnesium coated steel sheet to be stamped based on hot dipping and high-temperature austenitizing technologies contains an α-Fe (Zn, Al) single-layer structure, in which Fe, Zn, Al, and Mg elements are uniformly distributed.

High-temperature tensile mechanical property test shows that the above-mentioned zinc-aluminum-magnesium coated steel sheet to be stamped based on hot dipping and high-temperature austenitizating technologies, obtained under the austenitizing conditions of austenitizing temperature of 920 °C and holding time of 1-3 min, has an elongation rate of 38-54%.

According to the above experimental results, the present invention has the following advantages:
1. Compared with prior art, the zinc-aluminum-magnesium coated steel sheet to be stamped based on hot dipping and high-temperature austenitizing technologies provided in the present invention has higher high-temperature tensile mechanical propertie. The steel sheet to be stamped, obtained under the austenitizing conditions of austenitizing temperature of 920 °C and holding time of 1-3 min, has a tensile strength of 77.2 MPa and an elongation of 46.6%. Compared with the steel sheet with pure zinc coating in comparative example 1, the elongation of the zinc-aluminum-magnesium coated steel plate to be stamped in the present invention is increased by 7.4% at the same austenitizing temperature and holding time.
2. Compared with prior art, the zinc-aluminum-magnesium coated steel sheet based on hot dipping technology in the present invention has higher corrosion resistance. In a 3.5 wt% NaCl solution at 25° C, the corrosion current density I_{corr} of the zinc-aluminum-magnesium coated steel sheet based on hot dipping technology is 1.35×10⁻⁵ A/cm². Compared with the steel sheet with pure zinc coating in comparative example 1, the corrosion current density of the zinc-aluminum-magnesium coated steel sheet based on hot dipping technology in the present invention is reduced by 0.5×10⁻⁵ A/cm² under the same temperature and test solution conditions.
3. The zinc-aluminum-magnesium coated steel plate to be stamped based on hot dipping and high-temperature austenitizing technologies designed and prepared in the present invention does not use rare earth elements. This reduces raw material costs compared with existing rare earth-containing coating technologies, making it more suitable for commercial promotion.

### BRIEF DESCRIPTION OF THE DRAWINGS

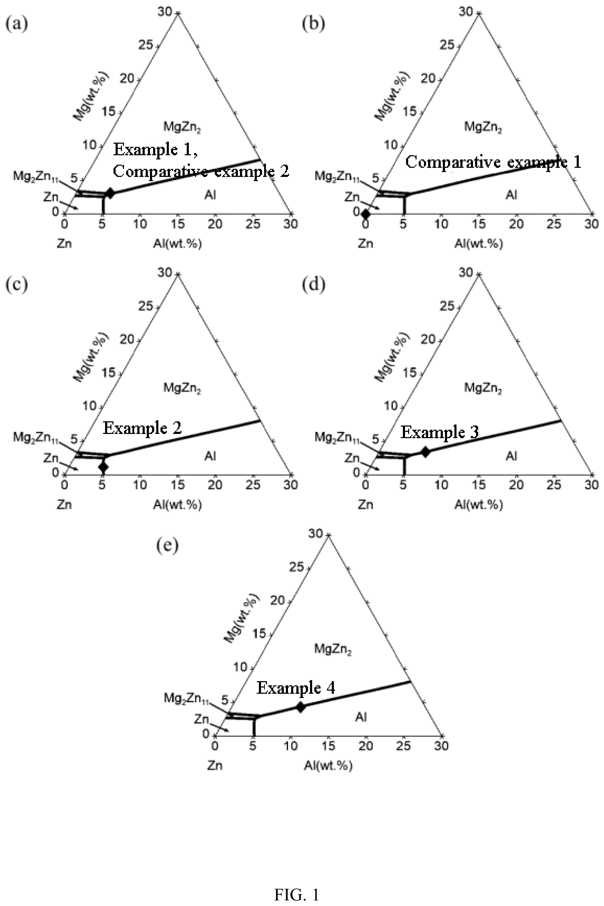

FIG. 1 illustrates the distribution of the calculated plating bath composition in a liquidus projection diagram of the Zn-Al-Mg alloy according to the present invention, wherein FIG. 1a illustrates the distribution position of the Zn-4.5Al-3.0Mg alloy in Example 1 and Comparative example 2 in the phase diagram, FIG.1b illustrates the distribution position of pure Zn in Comparative example 1 in the phase diagram, FIG.1c illustrates the distribution position of the Zn-4.5Al-1.1Mg alloy in Example 2 in the phase diagram, FIG.1d illustrates the distribution position of the Zn-6.0Al-3.6Mg alloy in Example 3 in the phase diagram, and FIG. 1e illustrates the distribution position of the Zn-8.5Al-4.2Mg alloy in Example 4 in the phase diagram.
FIG. 2 illustrates the cross-sectional SEM images of samples 1-2, 0-2, 2-2, 3-2, and 4-2 prepared in Example 1, Comparative example 2, Comparative example 1, and Examples 2-4 of the present invention.
FIG. 3 illustrates the potentiodynamic polarization curve images of samples 1-2, 0-2, 2-2, 3-2, and 4-2 prepared in Example 1, Comparative example 2, Comparative example 1, and Examples 2-4 of the present invention, measured in a 3.5 wt.% NaCl solution at 25 °C.
FIG. 4 illustrates the cross-sectional SEM images of samples 1-3, 0-3, 0-3', 2-3, 3-3, and 4 prepared in Example 1, Comparative examples 1-2, and Examples 2-4 of the present invention.
FIG. 5 illustrates the stress-strain curve images of Samples 1-3, 0-3, 2-3, 3-3 and 4-3 prepared in Example 1, Comparative Example 1, and Examples 2-4 in the present invention, under the conditions of an austenitizing temperature of 920 °C and a holding time of 1-3 min.

### DETAILED DESCRIPTION OF THE EMBODIMENTS

The present invention is further illustrated in detail by examples in conjunction with the accompanying drawings provided, but it is not intended to limit the scope of the present invention.

A liquidus projection diagram of the Zn-Al-Mg system was constructed by experimentally determining the primary phases and phase contents of alloys with different compositions. The phase equilibrium relationships of the Zn-Al-Mg system were established based on the phase compositions. Partial relevant data from the liquidus projection phase diagram database of the Zn-Al-Mg system are disclosed int the present invention, enabling the identification of phase types and volume fractions in Zn-Al-Mg alloys.

Subsequently, based on the constructed thermodynamic phase diagram database of the Zn-Al-Mg system, the corresponding alloys of Examples 1-4 and Comparative examples 1-2 were obtained by thermodynamic calculation, as shown in FIG.1, and the results are shown in Table 1.

**Table 1 Alloy composition table of Zn-Al-Mg coating**

| Calculated composition | Corresponding alloy |
|---|---|
| Zn-4.5Al-3.0Mg | Example 1 |
| Pure Zn | Comparative example 1 |
| Zn-4.5Al-3.0Mg | Comparative example2 |
| Zn-4.5Al-1.1Mg | Example 2 |
| Zn-6.0Al-3.6Mg | Example 3 |
| Zn-8.5Al-4.2Mg | Example 4 |

To facilitate the description, the naming convention for samples in the examples of the present invention is explained as follows: the naming follows the format Sample a-b, where a represents the serial number of the example, and b represents the product obtained at a specific step within that example. For example, the product obtained in step 2 of Example 1 is named as Sample 1-2, while the product obtained in Step 3 of Example 2 is named as Sample 2-3.

### Example 1

A zinc-aluminum-magnesium coated steel sheet to be stamped based on hot dipping and austenitizing technologies, specifically a zinc-aluminum-magnesium coated steel sheet used a plating bath with composition of Zn-4.5Al-3.0Mg, is prepared by the following steps of:
Step 1, preparation of a steel substrate to be hot-dipped: steel materials to be treated was heated and smelted into melted iron, which then was subjected to melted iron pretreatment, converter smelting, secondary refining, and continuous casting to obtain a steel billet, followed by subjecting the steel billet to heating, rolling, controlled-cooling, coiling, pickling, and cold rolling to obtain a steel substrate, and the steel substrate was finally subjected to continuous annealing at an annealing temperature of 800±5°C and a dew point of 50 ± 10°C to obtain the steel substrate to be hot-dipped.

To verify the composition of the steel substrate to be hot-dipped, ICP test was conducted. The test results show that the mass percentages of the steel substrate components are as follows: a C content of 0.33 wt.%, a Si content of 0.10 wt.%, a content of 1.45 wt.%, a P content of no more than 0.020 wt.%, a S content of no more than 0.004 wt.%, a Al content of 0.0080 wt.%, a Ti content of 0.02 wt.%, a V content of 0.18 wt.%, a N content of no more than 0.0040 wt.%, a B content of 0.0020 wt.%, and the balance of Fe and inevitable impurities.

Step 2, hot dipping of the steel substrate to be hot-dipped: first, a plating bath was prepared according to the following mass percentages of a Al content of 4.5 wt.%, a Mg content of 3.0 wt.%, and the balance of Fe and inevitable impurities, and then the steel substrate obtained in step 1 was subject to hot dipping in the plating bath under the conditions of a dipping temperature of 440-460 °C and dipping time of 3-10 s, followed by cooling the hot-dipped steel sheet to room temperature at the cooling rate of greater than 30 °C/s to obtain a zinc-aluminum-magnesium coated steel sheet based on hot dipping, named as Sample 1-2.

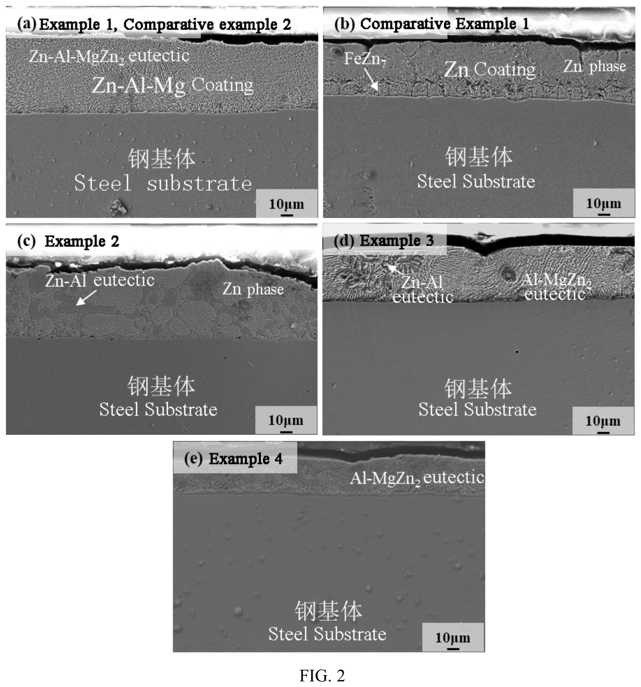

To verify the phase types and microstructure morphology of the zinc-aluminum-magnesium coating in Sample 1-2 obtained in step 2, SEM and EDS tests were conducted on the cross section of Sample 1-2. The test results, as shown in FIG. 2, indicate that Sample 1-2 includes a steel substrate, a zinc-aluminum-magnesium coating-2, and an intermediate compound layer between the steel substrate and the coating-2. The zinc-aluminum-magnesium coating-2 includes Zn-Al two-phase eutectic and Zn-Al-MgZn₂ three-phase eutectic. The total eutectic content of the Zn-Al two-phase eutectic and the Zn-Al-MgZn₂ three-phase eutectic is 95 %, Zn element exists in the forms of Zn phase and MgZn₂ phase, and the lamellar spacing of the structure is less than 1 µm.

The intermediate compound layer is Fe-Al or Fe-Al-Zn intermetallic compounds with a thickness of 0.3-1µm.

Additionally, the test results show that the coating of Sample 1-2 exihibites a uniform microstructure with no localized zinc enrichment.

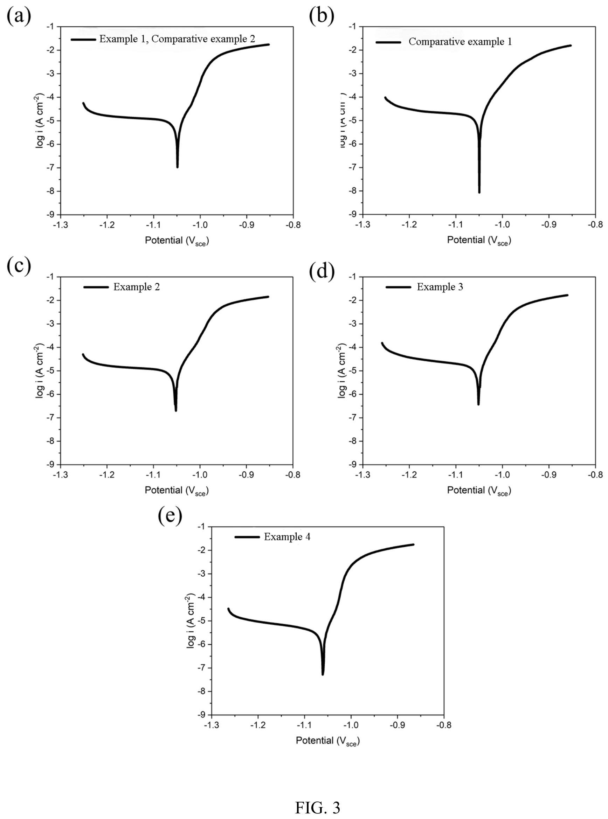

To verify the corrosion resistance of Sample 1-2, corrosion resistance test was conducted. The test results, as shown in FIG. 3, show that the corrosion current density I_{corr} of the Sample 1-2 is 1.35×10⁻⁵ A/cm² in a 3.5 wt.% NaCl solution at 25 °C. The test results indicate that the Zn-Al-MgZn₂ three-phase eutectic obtained by the hot dipping in Step 2 can improve the corrosion resistance of the zinc-aluminum-magnesium coated steel sheet.

Step 3, preparation of the zinc-aluminum-magnesium coated steel sheet to be stamped based on hot dipping and austenitizing technologies: the Sample 1-2 obtained in step 2 was subjected to austenitizing under the conditions of an austenitizing temperature of 920°C and a holding time of 3 min to obtain the zinc-aluminum-magnesium coated steel sheet to be stamped based on hot dipping and high-temperature austenitizating technology, named as Sample 1-3.

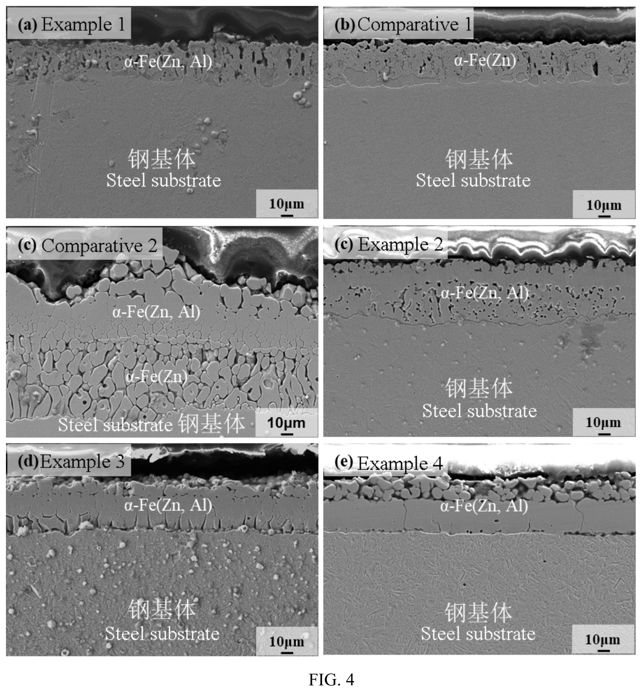

To verify the phase types and microstructure morphology of the zinc-aluminum-magnesium coating in Sample 1-3 obtained in step 3, SEM and EDS tests were conducted on the cross section of Sample 1-3. The test results, as shown in FIG. 4, indicate that Sample 1-3 includes a steel substrate and a zinc-aluminum-magnesium coating-3, and the intermediate compound layer between the steel substrate and the zinc-aluminum-magnesium coating-2 disappears. The zinc-aluminum-magnesium coating-3 includes an α-Fe(Zn, Al) single-layer structure, in which Fe, Zn, Al, and Mg elements are uniformly distributed, with a Zn content of 4.6-8.1 wt.%, a Al content of 0.7-1.2 wt.%, a Mg content of M 0-0.1 wt.%, and a O content of 0.9-8.2 wt.%. The test results show that the coating microstructure changes from Zn-Al two-phase eutectic and Zn-Al-MgZn₂ three-phase eutectic to α-Fe(Zn, Al) by the austenitizing in step 3.

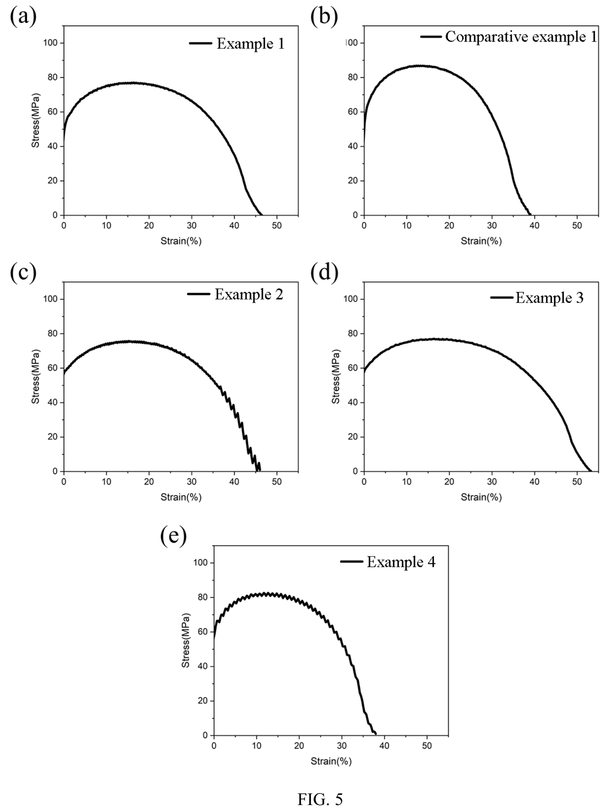

To verify the mechanical properties of Sample 1-3 under high-temperature conditions, high-temperature tensile mechanical property test was conducted. The test results, as shown in FIG.5, indicate that under the conditions of an austenitizing temperature of 920 °C and a holding time of 3 min, the tensile strength of Sample 1-3 is 77.2 MPa and the elongation is 46.6 %. The test results show that the high-temperature mechanical properties of the zinc-aluminum-magnesium coated steel sheet to be stamped based on hot dipping and austenitizing technologies are improved by the austenitizing in Step 3.

Step 4, stamping of the zinc-aluminum-magnesium coated steel sheet to be stamped based on hot dipping and austenitizing technologies: after austenitizing, Sample 1-3 obtained in Step 3 was immediately subjected to stamping and rapidly cooled to room temperature, obtaining the zinc-aluminum-magnesium coated steel sheet based on hot dipping and high-temperature forming technologies.

To verify the influence of Al element and Mg element in the plating bath on the properties of the coated steel sheet, Comparative example 1 is provided, which used a pure zinc plating bath, without the addition of Al element and Mg element.

### Comparative example 1

A pure zinc coated steel sheet was provided, with unspecified steps being the same as those in Example 1, differing in the following steps: the plating bath used in step 2 was pure zinc without the addition of Al and Mg elements, the product obtained in step 2 was named as Sample 0-2, and the product obtained in step 3 was named as Sample 0-3.

The SEM and EDS test results of Sample 0-2, as shown in FIG. 2, indicate that Sample 0-2 includes a steel substrate, a coating, and an intermediate compound layer between the steel substrate and the coating.

The coating includes a pure Zn phase.

The intermediate compound layer is an Fe-Zn intermetallic compound with a thickness of 10 µm, and multiple microcracks are observed in the intermediate compound layer.

The test results indicate that there is no eutectic structure in the coating of Sample 0-2 since the absence of Al and Mg elements in the plating bath. In contrast, Example 1 achieves Zn-Al two-phase eutectic and Zn-Al-MgZn₂ three-phase eutectic through its plating bath.

The corrosion resistance test results of Sample 0-2, as shown in FIG. 3, indicate that in a 3.5 wt.% NaCl solution at 25 °C, the corrosion current density I_{corr} of Sample 0-2 is 1.85×10⁻⁵ A/cm². Thees results show that the Zn-Al two-phase eutectic and the Zn-Al-MgZn₂ three-phase eutectic obtained by the plating bath in Example 1 improve the corrosion resistance.

The SEM and EDS test results of Sample 0-3, as shown in FIG. 4, indicate that the Sample 0-3 includes a steel substrate and a coating, where the intermediate compound layer between the steel substrate and the coating in Sample 0-3 disappears. The coating includes an α-Fe(Zn) single-layer structure, where Zn enrichment is observed at the interface between the coating and the steel substrate.

The test results show that the microstructure of the coating changes from pure Zn phase to α-Fe(Zn) by the austenitizing in step 3. Compared with Example 1, liquid zinc contacts with the steel substrate during austenitizing process.

The high-temperature tensile mechanical property test results of Sample 0-3, as shown in FIG. 5, indicate that under the austenitizing conditions of an austenitizing temperature of 920°C and a holding time of 3 min, Sample 0-3 has a tensile strength of 86.9 MPa and an elongation of 39.2 %. The test results show that, compared with Example 1, the liquid zinc does not contact with the steel substrate during the austenitizing process of Example 1, thereby achieving a higher elongation in the coated steel sheet.

To verify the influence of the austenitizing temperature on the uniformity of the microscopic distribution of coating components, Comparative example 2 is provided, which used a plating bath of Zn-4.5Al-3.0Mg from Example 1 but employed an austenitizing temperature of 850 °C.

### Comparative example 2

A steel plate prepared using a plating bath with a composition of Zn-4.5Al-3.0Mg was provided, with unspecified steps being the same as those in Example 1, differing in the following steps: the product obtained in step 2 was named as Sample 0-2', the austenitizing temperature of step 3 was 850 °C, and the product obtained in step 3 was named as Sample 0-3'.

The results and conclusions of the SEM, EDS, and corrosion resistance tests of Sample 0-2' are the same as those of Example 1.

The SEM and EDS test results of Sample 0-3', as shown in FIG. 4, indicate that the coating of Sample 0-3' includes a steel substrate and a coating, where the thin intermediate compound layer between the steel substrate and the coating in Sample 0-3' disappears. A lower layer of the coating includes an α-Fe(Zn) single-layer structure, where Zn element enrichment is observed at the interface between the α-Fe (Zn) single-layer structure with the steel substrate. An upper layer of the coating includes an α-Fe(Zn, Al) single-layer structure, where enrichment of Zn and Al elements are observed.

The test results indicate that the microstructure of the coating is delaminated by the austenitizing in step 3, transitioning from a Zn-Al-MgZn₂ three-phase eutectic to the structure consisting of the lower layer of α-Fe(Zn) and the upper layer of α-Fe(Zn, Al). Compared with Example 1, the microstructure of the coating exhibits inhomogeneity during the austenitizing process.

To verify the influence of eutectic structure in the coating on properties of the coated steel sheet, and to validate the effect of the Zn-Al-Mg thermodynamic phase diagram in the technical solution, Examples 2, 3, and 4 are provided.

The composition of plating bath in Example 2 was determined based on the Zn-Al two-phase eutectic line in the phase diagram. The mass percentages of the plating bath components are as follows: Zn content of 94.4 wt.%, Al content of 4.5 wt.%, and Mg content of 1.1 wt.%. The plating bath is referred to as Bath A.

The composition of plating bath in Example 3 was determined based on the Al-MgZn₂ two-phase eutectic line in the phase diagram. The mass percentages of the plating bath components are as follows: Zn content of 90.4 wt.%, Al content of 6.0 wt.%, and Mg content of 3.6 wt.%. The plating bath is referred to as Bath B for.

The composition of plating bath in Example 4 was determined based on the Al-MgZn₂ two-phase eutectic line in the phase diagram. The mass percentages of the plating bath components are as follows: Zn content of 87.3 wt.%, Al content of 8.5 wt.%, and Mg content of 4.2 wt.%. The plating bath is referred to as Bath C.

### Example 2

A zinc-aluminum-magnesium coated steel plate prepared using Bath A is provided, with unspecified steps being the same as those in Example 1, differing in the following steps: the plating bath used in step 2 was the Bath A, the product obtained in step 2 was named as Sample 2-2, and the product obtained in step 3 was named as Sample 2-3.

The SEM and EDS test results of Sample 2-2, as shown in FIG. 2, indicate that Sample 2-2 includes a steel substrate, a coating, and an intermediate compound layer between the steel substrate and the coating. The coating includes pure Zn phase and Zn-Al two-phase eutectic, with a content of the Zn-Al two-phase eutectic of 50%. The intermediate compound layer is Fe-Zn or Fe-Al-Zn intermetallic compounds, with a thickness of 0.3-1 µm,.

The test results indicate that the coating of Sample 2-2 exhibits a higher content of the Zn-Al two-phase eutectic structure due to changes in the composition of the plating bath. Compared with Example1, there are more Zn-Al two-phase eutectic in the coating of Example 2.

The corrosion resistance test results of Sample 2-2, as shown in FIG. 3, indicate that in a 3.5 wt.% NaCl solution at 25 °C, the corrosion current density I_{corr} of Sample 2-2 is 1.20×10⁻⁵ A/cm². These results show that the coating of Example 2 contains more Zn-Al two-phase eutectic due to changes in the composition of the plating bath, enabling the coating of Sample 2-2 to achieve higher corrosion resistance.

The SEM and EDS test results of Sample 2-3, as shown in FIG. 4, indicate that the Sample 2-3 includes a steel substrate and a coating, where the intermediate compound layer between the steel substrate and the coating in Sample 2-3 disappears. The coating includes an α-Fe (Zn) single-layer structure, in which Fe, Zn and Al elements are uniformly distributed, with a Zn content of 3.5-7.5 wt.%, a Al content of 0.5-1.7 wt.%, a Mg content of 0-0.1 wt.%, and a O content of 0.5-10.0 wt.%.

The test results show that the coating microstructure changes from pure Zn phase and Zn-Al two-phase eutectic to α-Fe(Zn) by the austenitizing in step 3, with its microstructural constituent being similar to that of Example 1.

The high-temperature tensile mechanical property test results of Sample 2-3, as shown in FIG. 5, indicate that under the austenitizing conditions of an austenitizing temperature of 900°C and a holding time of 1 min, Sample 2-3 has a tensile strength of 75.8 MPa and an elongation of 46.0 %. The test results show that the elongation decreases after the austenitizing in step 3.

By comparing Example 1 and Example 2, it can be seen that an increase in the content of Zn-Al two-phase eutectic leads to improved corrosion resistance but results in a reduction in elongation.

### Example 3

A zinc-aluminum-magnesium coated steel plate prepared using Bath B is provided, with unspecified steps being the same as those in Example 1, differing in the following setps: the plating bath used in step 2 was the Bath B, the product obtained in step 2 was named as Sample 3-2, and the product obtained in step 3 was named as Sample 3-3.

The SEM and EDS test results of Sample 3-2, as shown in FIG. 2, indicate that Sample 3-2 includes a steel substrate, a coating, and an intermediate compound layer between the steel substrate and the coating. The coating includes Zn-Al two-phase eutectic and Al-MgZn₂ two-phase eutectic, with a content of the Al-MgZn₂ two-phase eutectic of 80%, where a lamellar spacing distance of the Al-MgZn₂ two-phase eutectic of less than 1 µm, and Zn element exists in the form of MgZn₂ in the Al-MgZn₂ two-phase eutectic. The intermediate compound layer is Fe-Zn or Fe-Al-Zn intermetallic compounds with a thickness of 1-2 µm,.

The test results indicate that the coating of Sample 3-2 exhibits a higher content of the Al-MgZn₂ two-phase eutectic structure due to changes in the composition of the plating bath. Compared with Example1, there are more Al-MgZn₂ two-phase eutectic in the coating of Example 3.

The corrosion resistance test results of Sample 3-2, as shown in FIG. 3, indicate that in a 3.5 wt.% NaCl solution at 25 °C, the corrosion current density I_{corr} of Sample 3-2 is 1.52×10⁻⁵ A/cm². These results show that the coating of Example 3 contains more Al-MgZn₂ two-phase eutectic due to changes in the composition of the plating bath, resulting in reduced corrosion resistance.

The SEM and EDS test results of Sample 3-3, as shown in FIG. 4, indicate that the Sample 3-3 includes a steel substrate and a coating, where the intermediate compound layer between the steel substrate and the coating in Sample 3-3 disappears. The coating includes an α-Fe (Zn, Al) single-layer structure, in which Fe, Zn and Al elements are uniformly distributed, with a Zn content of 7.2-10.3 wt.%, a Al content of 7.8-12.2 wt.%, a Mg content of 0-0.2 wt.%, and a O content of 0.9-5.6 wt.%.

The test results show that the coating microstructure changes from Zn-Al two-phase eutectic and Al-MgZn₂ two-phase eutectic to α-Fe(Zn, Al) by the austenitizing in step 3, with its microstructural constituent being similar to that of Example 1.

The high-temperature tensile mechanical property test results of Sample 3-3, as shown in FIG. 5, indicate that under the austenitizing conditions of an austenitizing temperature of 900°C and a holding time of 1 min, Sample 3-3 has a tensile strength of 77.1 MPa and an elongation of 53.2 %. The test results show that, compared with Example 1, the elongation increases after the austenitizing in step 3.

By comparing Example 1 and Example 3, it can be seen that an increase in the content of Al-MgZn₂ two-phase eutectic leads to a reduction in corrosion resistance but results in an improvement in elongation.

### Example 4

A zinc-aluminum-magnesium coated steel plate prepared using Bath C is provided, with unspecified steps being the same as those in Example 1, differing in the following steps: the plating bath used in step 2 was the plating solution C, the product obtained in step 2 was named as Sample 4-2, and the product obtained in step 3 was named as Sample 4-3.

The SEM and EDS test results of Sample 4-2, as shown in FIG. 2, indicate that Sample 4-2 includes a steel substrate, a coating, and an intermediate compound layer between the steel substrate and the coating. The coating includes Zn-Al two-phase eutectic and Al-MgZn₂ two-phase eutectic, with a content of the Al-MgZn₂ two-phase eutectic of 80%, where a lamellar spacing distance of the Al-MgZn₂ two-phase eutectic is less than 1 µm, and Zn element exists in the forms of MgZn₂ in the Al-MgZn₂ two-phase eutectic. The intermediate compound layer is Fe-Zn or Fe-Al-Zn intermetallic compounds with a thickness of 2-3 µm.

The test results show that, compared with Example1, the microstructural unifromity of the coating is relative poor.

The corrosion resistance test results of Sample 4-2, as shown in FIG. 3, indicate that in a 3.5 wt.% NaCl solution at 25 °C, the corrosion current density *I_{corr}* of Sample 4-2 is 1.68×10⁻⁵ A/cm². These results show that the coating of Example 4 contains more Al-MgZn₂ two-phase eutectic due to changes in the composition of the plating bath, resulting in reduced corrosion resistance.

The SEM and EDS test results of Sample 4-3, as shown in FIG. 4, indicate that the Sample 4-3 includes a steel substrate and a coating, where the intermediate compound layer between the steel substrate and the coating in Sample 4-3 disappears. The coating includes an α-Fe (Zn, Al) single-layer structure, where Zn enrichment is observed at the interface between the coating and the steel substrate.

The test results show that the microstructure of the coating changes from Zn-Al two-phase eutectic and Al-MgZn₂ two-phase eutectic to α-Fe(Zn,Al) by the austenitizing in step 3. Compared with Example 1, liquid zinc contacts with the steel substrate during austenitizing process.

The high-temperature tensile mechanical property test results of Sample 4-3, as shown in FIG. 5, indicate that under the austenitizing conditions of an austenitizing temperature of 920°C and a holding time of 1 min, Sample 4-3 has a tensile strength of 82.6 MPa and an elongation of 38.0 %. The test results show that, compared with Example 1, the elongation significantly decreased after the austenitizing in step 3.

By comparing Examples 1-4 and Comparative examples 1-2, the following conclusions can be obtained:
1. The corrosion resistance of the zinc-aluminum-magnesium coated steel sheet based on hot dipping technology increases with the increase in the content of the Zn-Al eutectic content in the coating structure, while it decreases with the increase in the content of the Al-MgZn₂ eutectic.
2. The elongation of the zinc-aluminum-magnesium coated steel sheet to be stamped based on hot dipping and high-temperature austenitizing technologies decreases with the increase in the content of the Zn-Al two-phase eutectic in the coating structure, while it improves with the increase in the content of the Al-MgZn₂ two-phase eutectic.

Therefore, based on the above analysis, by means of phase diagram calculations and the method for preparing the zinc-aluminum-magnesium coated steel sheet by austenitizing, the present invention achieves significant technical effect improvements.

In summary, a method for preparing zinc-aluminum-magnesium coated steel sheets to be stamped based on hot dipping and high-temperature austenitizing technologies described in the above-mentioned examples of the present invention utilizes phase diagram calculations to guide the compositional design, prepares materials according to the mass percentages of composition of the plating bath of Zn content of 85-95 wt.%, Al content of 4.5-8.5 wt.%, and Mg content of 1-4.5 wt.%, and obtains the zinc-aluminum-magnesium coated steel sheet based on hot dipping and high-temperature forming technologies after hot dipping and austenitizing. The zinc-aluminum-magnesium coated steel sheet prepared by the present invention forms Zn-Al-MgZn₂ three-phase eutectic in the coating structure after hot dipping. When the Zn content is 92.5 wt.%, the Al content is 4.5 wt.%, and the Mg content is 3.0 wt.%, the corrosion current density *I_{corr}* of the zinc-aluminum-magnesium coated steel sheet in a 3.5 wt.% NaCl solution at 25 °C is 1.35×10⁻⁵ A/cm² , while under the conditions of a temperature of 900-920°C and a holding time of 1-3 min, the elongation is 46.6 %.

## Claims

1. A zinc-aluminum-magnesium coated steel sheet to be stamped based on hot dipping and high-temperature austenitizing technologies, wherein the zinc-aluminum-magnesium coated steel sheet to be stamped is prepared by subjecting a steel substrate to hot dipping and austenitizing under high-temperature conditions, wherein
a plating bath for the hot dipping is a Zn₋Al-Mg plating bath, with a composition by mass percentage as follows: Al content of 4.5-8.5 wt.%, Mg content of 1-4.5 wt.%, and the balance of Zn and inevitable impurities;
the steel substrate after the hot dipping becomes a zinc-aluminum-magnesium coated steel sheet based on hot dipping comprising a steel substrate, a zinc-aluminum-magnesium coating-2, and an intermediate compound layer between the steel substrate and the coating-2, wherein
the zinc-aluminum-magnesium coating-2 comprises Zn, Al, and MgZn₂ phases; the zinc-aluminum-magnesium coating-2 comprises Zn-Al two-phase eutectic and Zn-Al-MgZn₂ three-phase eutectic, wherein a total eutectic content of the Zn-Al two-phase eutectic and the Zn-Al-MgZn₂ three-phase eutectic is 50-95%, and a lamellar spacing of the eutectic structure is less than 1 µm;
the intermediate compound layer between the steel sheet and the coating, referred to as an intermediate compound layer, is Fe-Al or Fe-Al-Zn intermetallic compounds;
after having undergoing austenitizing at 900-920°C, the zinc-aluminum-magnesium coated steel sheet based on hot dipping technology is changed into a zinc-aluminum-magnesium coated steel sheet to be stamped based on hot dipping and austenitizing technologies, wherein
the zinc-aluminum-magnesium coated steel sheet to be stamped based on hot dipping and austenitizing technologies comprises a steel substrate and a zinc-aluminum-magnesium coating-3, wherein the zinc-aluminum-magnesium coating-3 comprises an α-Fe(Zn, Al) single-layer structure, in which Fe, Zn, Al, and Mg elements are uniformly distributed, with a Zn content of 3.5-10.3 wt.%, a Al content of 0.5-12.2 wt.%, a Mg content of 0-0.2 wt.%, and a O content of 0.5-8.2 wt.%.

2. The zinc-aluminum-magnesium coated steel sheet to be stamped based on hot dipping and austenitizing technologies according to claim 1, wherein the steel substrate comprises following chemical components in percentage by mass: a C content of 0.31-0.35 wt.%, a Si content of 0.05-0.20 wt.%, a Mn content of 1.40-1.50 wt.%, P content of no more than 0.020 wt.%, a S content of no more than 0.004 wt.%, a Al content of no less than 0.060 wt.%, a Ti content of 0.010-0.025 wt.%, a V content of 0.16-0.20 wt.%, a N content of no more than 0.0045 wt.%, a B content of 0.0010-0.0030 wt.%, and the balance of Fe and inevitable impurities.

3. The zinc-aluminum-magnesium coated steel sheet to be stamped based on hot dipping and austenitizing technologies according to claim 1, wherein in the Zn-Al two-phase eutectic and Zn-Al-MgZn₂ three-phase eutectic of the zinc-aluminum-magnesium coating-2, Zn element exists in the forms of Zn phase and MgZn₂ phase, Al element exists in the form of Al phase, and the lamellar spacing of the eutectic structure is less than 1 µm.

4. The zinc-aluminum-magnesium coated steel sheet to be stamped based on hot dipping and austenitizing technologies according to claim 1, wherein a thickness of the intermediate compound layer is 0.3-3 µm.

5. The zinc-aluminum-magnesium coated steel sheet to be stamped based on hot dipping and austenitizing technologies according to claim 1, wherein a Zn content in the plating bath is 85-95 wt.%.

6. A method for preparing the zinc-aluminum-magnesium coated steel sheet to be stamped based on hot dipping and austenitizing technologies according to claim 1, comprising following steps of:
step 1, preparing a steel substrate to be hot-dipped;
step 2, performing hot dipping on the steel substrate to be hot-dipped: first preparing the plating bath, and then performing hot dipping on the steel substrate to be hot-dipped prepared in step 1 to obtain the zinc-aluminum-magnesium coated steel sheet based on hot dipping, named as sample 1-2; and
step 3, performing austenitizing on the zinc-aluminum-magnesium coated steel sheet based on hot dipping: performing austenitizing on the sample 1-2 obtained in step 2 to obtain the zinc-aluminum-magnesium coated steel sheet to be stamped based on hot dipping and high-temperature austenitizating technologies, named as sample 1-3.

7. The preparation method according to claim 6, wherein:
in the step 1, steel materials to be treated is heated and smelted into melted iron, which then undergoes melted iron pretreatment, converter smelting, secondary refining, and continuous casting to obtain a steel billet, followed by subjecting the steel billet to heating, rolling, controlled-cooling, coiling, pickling, and cold rolling to obtain a steel substrate, and finally, the steel substrate is subject to continuous annealing at an annealing temperature of 800±5°C and a dew point of 50 ± 10°C to obtain the steel substrate to be hot-dipped;
in the step 2, the plating bath has a composition by mass percentage as follows: a Al content of 4.5-8.5 wt%, a Mg content of 1-4.5 wt.%, and the balance of Zn and inevitable impurities; and
in the step 2, the steel sheet to be hot-dipped is subject to hot dipping under conditions of a dipping temperature of 440-460°C and a dipping time of 3-10 s, then the hot-dipped steel sheet is cooled to room temperature at a cooling rate of greater than 30 °C/s.

8. The preparation method according to claim 6, wherein in the step 3, austenitizing conditions are as follows: an austenitizing temperature of 900-920°C and a holding time of 1-3 min.

9. A use of the zinc-aluminum-magnesium coated steel sheet to be stamped based on hot dipping and high-temperature austenitizing technologies according to any one of claims 1 to 5 as a high-temperature mechanical material.
